# FASCICULE DE BREVET EUROPEEN

(11) **EP 2 782 814 B1**
(45) Date de publication et mention de la délivrance du brevet: **09.03.2016**
(21) Numéro de dépôt: 12806543.0
(22) Date de dépôt: 22.11.2012
(51) Int. Cl.: B62D 31/00, B62D 47/00, B62D 61/06, B60J 5/02, B62K 5/05

(54) **VEHICULE URBAIN A FAIBLE ENCOMBREMENT**
KOMPAKTES STADTFAHRZEUG
COMPACT URBAN VEHICLE

(30) Priorité: 24.11.2011 FR 1160737
(43) Date de publication de la demande: 01.10.2014
(73) Titulaire: Ecole Centrale De Lyon, 69134 Ecully Cedex (FR)
(72) Inventeur: JEZEQUEL, Louis, F-69009 Lyon (FR); LABORDE, Jérôme, F-69002 Lyon (FR); PERRARD, Patrick, F-69890 La Tour De Salvagny (FR)
(74) Mandataire: Thibault, Jean-Marc
(86) Numéro de dépôt international: PCT/FR2012/052690
(87) Numéro de publication internationale: WO 2013/076425

(56) Documents cités:
- WO-A9-02/18163
- FR-A1- 2 865 706
- FR-A1- 2 926 458
- GB-A- 701 864
- US-A- 5 248 011
- US-A- 6 095 268

## Description

La présente invention concerne le domaine technique des véhicules automobiles et elle vise plus précisément les véhicules automobiles à caractère urbain.

Dans l'état de la technique, il a été proposé divers véhicules ayant pour vocation des déplacements essentiellement urbains.

Ainsi, par exemple, le document WO 02/18163 décrit un véhicule comportant un châssis équipé de quatre roues et de deux sièges de réception d'utilisateurs, placés côte à côte et à l'intérieur d'un habitacle s'ouvrant à l'avant du véhicule et fermé par une porte montée basculante.

La demande de brevet FR 2 865 706 décrit un véhicule automobile à trois ou quatre roues coopérant avec une roue arrière motorisée et deux roues avant orientées par un système de direction. Un siège est disposé entre les deux roues avant de sorte que les jambes du conducteur enjambent l'axe passant par le centre des deux roues avant.

Le brevet US 5 248 011 décrit un véhicule comportant un châssis supportant deux roues avant motorisées et une roue arrière directrice.

Dans le domaine du jouet, il est connu par le brevet US 6 095 268, qui divulge le préambule de la revendication 1, une voiture miniature comportant un châssis équipé de deux roues avant motrices, indépendantes l'une de l'autre et d'une roue arrière directrice.

L'une des caractéristiques communes à ces véhicules est la recherche d'un encombrement réduit. Il s'avère en pratique que la réalisation d'un véhicule à encombrement réduit ne permet pas de conserver au véhicule, ses qualités de sécurité, de robustesse et de facilité d'utilisation.

La présente invention vise à proposer un nouveau véhicule à caractère urbain conçu pour présenter un encombrement réduit par rapport au véhicule antérieur tout en étant robuste, sûr et facile d'utilisation.

Pour atteindre un tel objectif le véhicule comporte :
- un châssis équipé d'un train central de roulement arrière directeur et en tant que train de roulement avant, d'une roue motrice avant droite et d'une roue motrice avant gauche indépendante de la route motrice avant droite, les roues avant et le train central arrière s'établissant selon un triangle dont la base, délimitée par les roues avant, définit l'avant du véhicule et le sommet, l'arrière du véhicule,
- un premier moteur de traction entraînant en rotation la roue motrice avant gauche et un deuxième moteur de traction entraînant en rotation la roue motrice avant droite, les moteurs de traction étant pilotés par une centrale de commande,
- un plancher de réception pour les utilisateurs supporté par le châssis et s'étendant entre les roues avant en s'ouvrant librement à l'avant du véhicule entre les roues avant gauche et droite,
- une carrosserie délimitant au moins au-dessus du plancher, un habitacle s'ouvrant à l'avant entre les roues avant gauche et droite,
- et une porte pour fermer l'avant de l'habitacle, montée basculante selon un axe horizontal pour occuper une position relevée libérant l'accès au plancher et une position abaissée pour fermer l'accès au plancher, cette porte basculante étant équipée d'un pare-brise et d'équipements de commande et de pilotage du véhicule.

De plus, le véhicule selon l'invention peut présenter en outre en combinaison au moins l'une et/ou l'autre des caractéristiques additionnelles suivantes :
- la porte basculante est équipée d'une traverse de sécurité conçue pour être verrouillée avec le châssis en position abaissée de la porte et s'étendre frontalement devant l'habitacle,
- la porte basculante est pourvue d'un pare-chocs destiné à venir s'établir à l'avant du véhicule en position abaissée de la porte,
- la porte basculante est déplacée à l'aide d'un mécanisme du type à parallélogramme déformable motorisé,
- le mécanisme du type à parallélogramme déformable motorisé comporte deux bras-moteurs reliés chacun à l'une de ses extrémités à un axe motorisé porté par le châssis et à l'autre de ses extrémités à un cadre support de la porte basculante par l'intermédiaire d'un pivot, le mécanisme comportant également au moins un bras de liaison articulé entre le châssis et le cadre support de la porte,
- le bras de liaison s'étend sensiblement au milieu du cadre support de la porte basculante en étant relié à la traverse de sécurité et à une traverse frontale de liaison du cadre support de la porte,
- le châssis comporte un système d'absorption des chocs survenant sur la porte,
- l'habitacle est équipé de deux sièges montés côte à côte et accessibles par l'avant du véhicule,
- les deux sièges et le plancher sont montés sur une structure relevable permettant de dégager dans l'habitacle, un espace qui en position relevée de la porte est accessible pour l'engagement de l'arrière d'un véhicule électrique de même type,
- le châssis comporte une structure rigide centrale à partir de laquelle s'étend à l'avant, deux longerons entre lesquels le plancher est positionné, la structure rigide centrale comportant vers l'arrière une structure de support convergente vers le train central de roulement arrière directeur,
- la structure rigide centrale supporte élastiquement, pour chaque roue motrice avant un demi-essieu relié à un moteur de traction et par une transmission, à l'axe de la roue avant supporté par un bras de suspension,
- le train central de roulement arrière directeur est un bogie à axe vertical piloté en rotation,
- les équipements de pilotage du véhicule comportent un système mécanique ou électrique de direction,
- le système mécanique de direction comporte un volant de direction porté par la traverse de sécurité de la porte basculante, le volant de direction agissant sur un train d'engrenages destinés à coopérer en position abaissée de la porte, avec un engrenage d'un arbre de transmission agissant sur le train de roulement arrière directeur.

Diverses autres caractéristiques ressortent de la description faite ci-dessous en référence aux dessins annexés qui montrent, à titre d'exemples non limitatifs, des formes de réalisation de l'objet de l'invention.

Les **Figures 1** et **2** sont des vues en perspective d'un véhicule conforme à l'invention prises respectivement de l'avant et de l'arrière du véhicule.

La **Figure 3** est une vue de dessus du véhicule conforme à l'invention.

La **Figure 4** est une vue de côté du véhicule conforme à l'invention.

Les **Figures 5** et **6** sont des vues en coupe transversale prises respectivement selon les lignes **A-A** et **B-B** de la **Fig. 4****.**

La **Figure 7** est une vue en perspective montrant le véhicule avec la porte d'accès en position relevée.

La **Figure 8** est une vue analogue à la **Fig. 7** montrant le véhicule avec la porte d'accès relevée ainsi que le plancher en position relevée.

Les **Figures 9** et **10** sont des vues en perspective montrant le châssis mécanisé du véhicule respectivement prises de l'avant et de l'arrière du véhicule.

La **Figure 11** illustre en perspective l'essieu avant du véhicule selon l'invention.

Les **Figures 12** à **14** illustrent différents exemples de stationnement d'une série de véhicules conformes à l'invention.

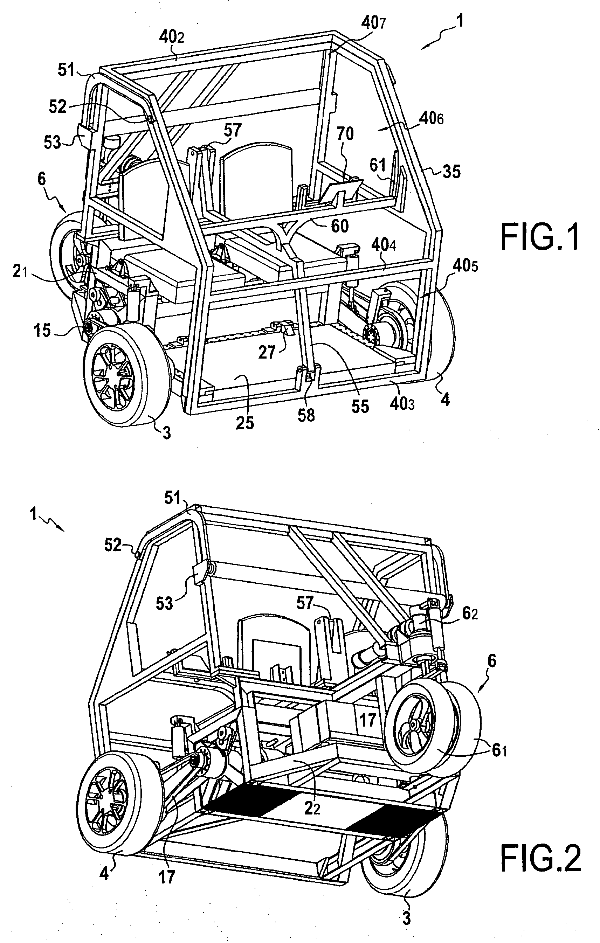

Tel que cela ressort plus précisément des **Fig. 1 à 4****,** l'objet de l'invention concerne un véhicule **1** à trois roues présentant une forme générale triangulaire. Le véhicule **1** comporte un châssis **2** équipé en tant que train de roulement avant, d'une roue motrice avant droite **3** et d'une roue motrice avant gauche **4,** considérées selon le sens normal de déplacement en marche avant du véhicule. Comme cela sera expliqué dans la suite de la description, les roues motrices avant droite **3** et gauche **4** sont indépendantes l'une de l'autre.

Le châssis **2** est également équipé d'un train central de roulement arrière directeur **6**. Selon une variante préférée de réalisation mais non exclusivement, le train central de roulement arrière directeur **6** est un bogie à 2 roues **6₁,** muni d'un axe vertical **6₂** piloté en rotation pour contrôler le pivotement des roues dans le plan horizontal en vue de conférer la direction au véhicule.

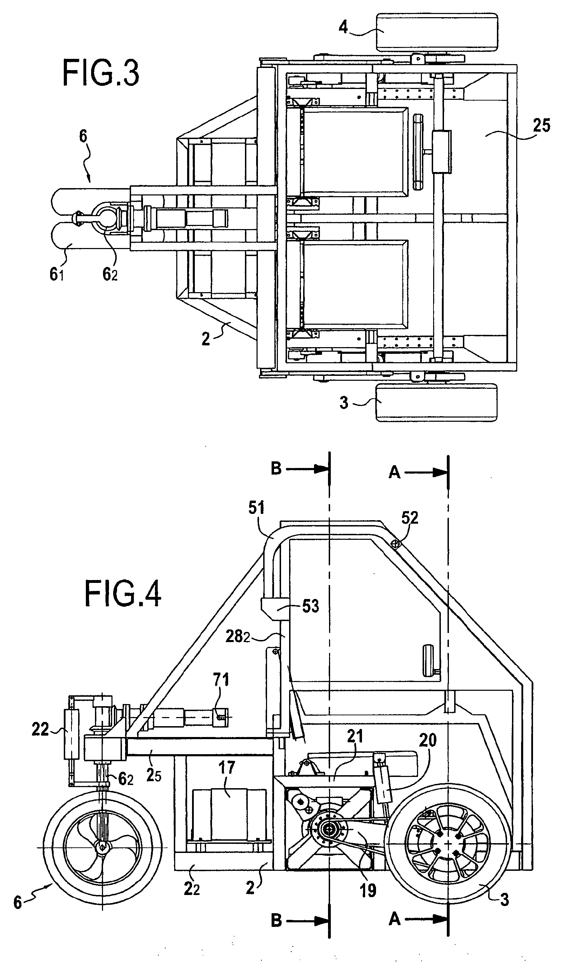

Ce train de roulement arrière **6** s'étend au milieu entre les roues avant **3, 4** de sorte que les roues avant **3, 4** et le train de roulement arrière **6** s'établissent selon un triangle comme cela apparaît clairement à la **Fig. 3****.** La base de ce triangle qui est délimitée par les roues avant **3, 4** définit l'avant du véhicule tandis que le sommet de ce triangle défini par le train arrière de roulement **6** correspond à l'arrière du véhicule **1**.

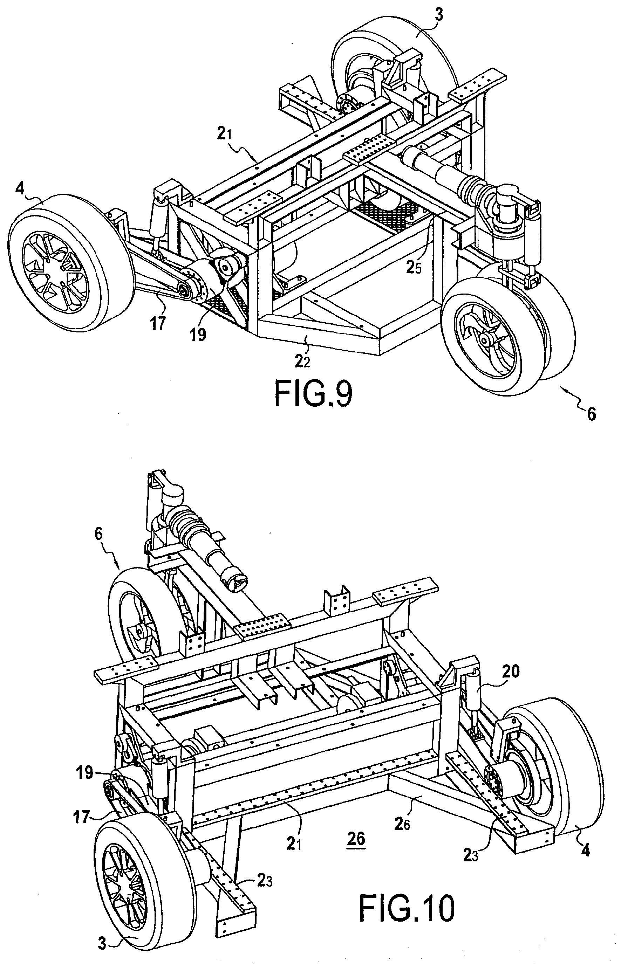

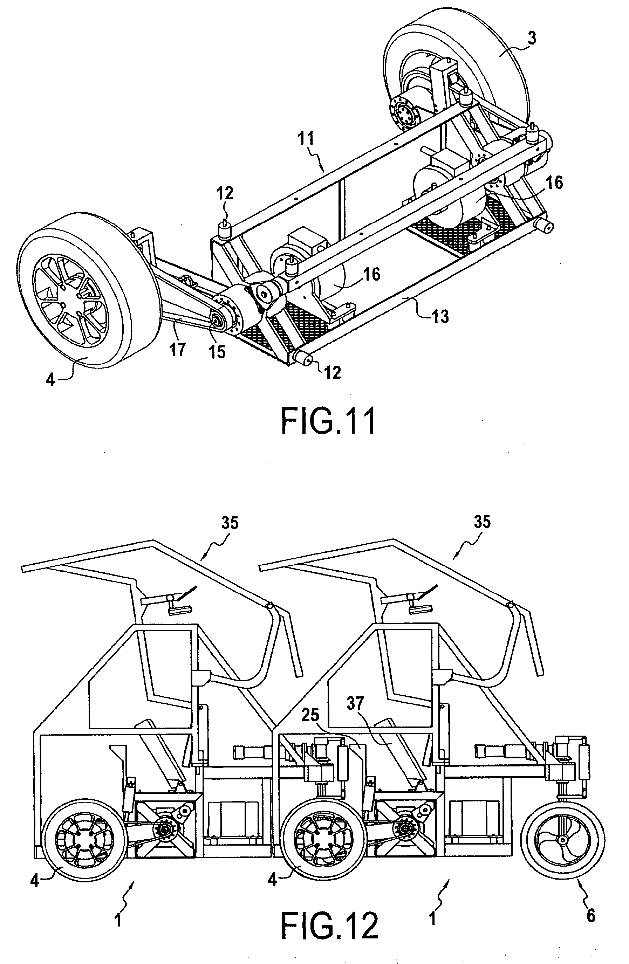

Le châssis **2** comporte dans l'exemple illustré, une structure rigide centrale **2₁** à partir de laquelle s'étend vers l'arrière, une structure de support **2₂,** et vers l'avant, deux longerons **2₃,** s'étendant parallèlement l'un à l'autre. Tel que cela ressort plus précisément des **Fig. 9** et **10****,** la structure rigide centrale **2₁** présente une forme générale parallélépipédique s'étendant sur la largeur du véhicule pour servir de logement et de support notamment, à un essieu avant motorisé **11** tel qu'illustré à la **Fig. 11****.** La structure rigide centrale **2₁** est destinée à supporter élastiquement par des plots élastiques **12,** l'essieu avant motorisé **11.**

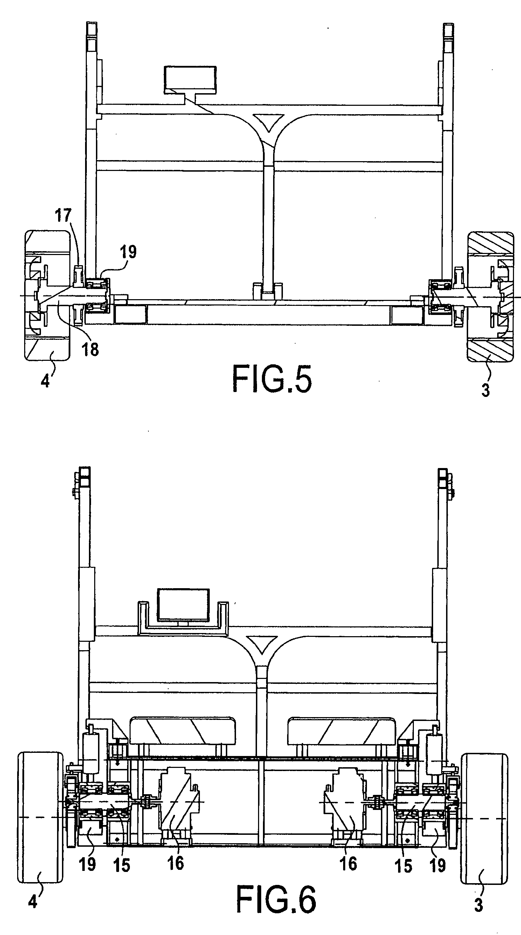

Cet essieu avant motorisé **11** comporte un bâti **13** supportant pour chaque roue avant motrice **3, 4** comme illustré à la **Fig. 6****,** un demi-essieu **15** relié à un moteur de traction **16** supporté par le bâti **13.** Selon une variante préférée de réalisation, chaque moteur de traction **16** est de type électrique. Par exemple, les moteurs de traction **16** sont reliés à un pack batteries **17** supporté par la structure de support **2₂** du châssis. Bien entendu, les moteurs de traction **16** peuvent être différents de moteurs électriques.

Chaque demi-essieu **15** est relié par l'intermédiaire d'une transmission **17,** à l'axe **18** d'une roue avant **3, 4** (**Fig. 5**). Chaque axe **18** d'une roue avant **3,4** est supporté par un bras de suspension **19** muni de paliers de guidage pour un demi-essieu **15.**

Selon une variante préférée de réalisation, chaque bras de suspension **19** est relié au châssis **2** par l'intermédiaire d'un système de suspension **20** réalisée de toute manière appropriée tel que, par des amortisseurs classiques. Dans l'exemple illustré, chaque transmission **17** est réalisée par une courroie. Bien entendu, il peut être prévu que chaque roue avant motrice **3, 4** soit équipée directement d'un moteur par exemple électrique.

L'essieu motorisé **11** est ainsi directement supporté par le châssis **2** par le montage du bâti **13** de l'essieu avant motorisé **11** à l'intérieur de la structure rigide centrale **2₁.** Tel que cela ressort clairement des figures, les bras de suspension **19** s'étendent ainsi parallèlement aux longerons **2₃** et à l'extérieur de ces derniers. Les roues avant **3, 4** sont positionnées pour s'étendre légèrement en retrait par rapport à l'extrémité des longerons **2₃** (**Fig. 4**).

Dans l'exemple illustré, le train central de roulement arrière directeur **6** est supporté par une potence **2₅** s'étendant à partir de la structure de support **2₂,** Cette structure de support **2₂** converge avantageusement pour des raisons d'encombrement en direction du train central de roulement arrière directeur **6** qui se trouve ainsi suspendu par rapport à la potence **2₅,** Avantageusement le train central de roulement arrière **6** est équipé d'un système d'amortissement **22.**

Selon une caractéristique de l'invention, le véhicule **1** comporte un plancher **25** de réception pour les utilisateurs supporté par le châssis **2.** Ce plancher **25** s'étend entre les roues avant **3,4** et en particulier entre les longerons **2₃** en s'ouvrant librement à l'avant du véhicule entre les roues avant gauche **4** et droite **3.** En d'autres termes, le plancher **25** est directement accessible par l'avant du véhicule **1.**

Avantageusement, les longerons **2₃** sont pourvus de renforts **2₆** pour assurer le support du plancher **25.** De préférence, les renforts **2₆** sont fixés en biais entre la structure rigide centrale **2₁** et chaque longeron **2₃.** Les longerons **2₃** et la structure rigide centrale **2₁** présentent une forme générale en U délimitant entre eux un volume de dégagement libre **26** (**Fig. 10**). De préférence, le plancher **25** est monté sur une structure relevable **27** telle que des charnières fixées sur la structure rigide centrale **2₁** pour permettre de dégager le volume libre **26.** Ainsi, le plancher est monté pivotant d'avant en arrière de sorte que lorsque le plancher **25** est relevé, le volume **26** entre les longerons **2₃** est dégagé.

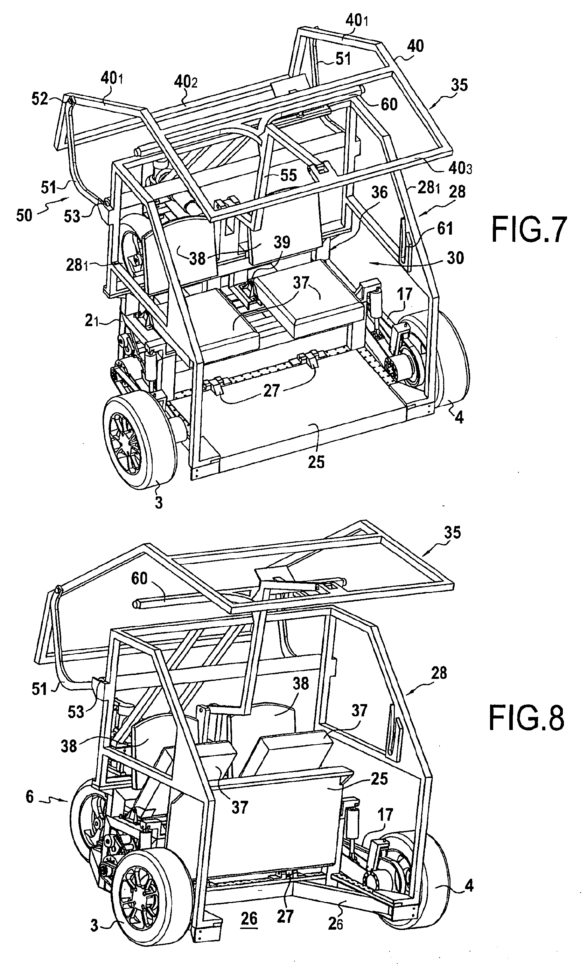

Il est à noter que dans l'exemple illustré (**Fig. 8**), la manoeuvre du plancher **25** est manuelle, mais il est clair que le pivotement du plancher peut être mécanisé. Dans le même sens, le plancher **25** est illustré comme étant réalisé par une unique plaque. Bien entendu, le plancher **25** peut être réalisé en deux parties. Selon cet exemple, il peut être envisagé que les deux parties du plancher **25** se trouvent articulées non pas d'avant en arrière mais au niveau des longerons **2₃** de manière à pivoter latéralement.

Le véhicule **1** selon l'invention, comporte également une carrosserie **28** délimitant au-dessus du plancher **5** un habitacle **30** s'ouvrant à l'avant entre les roues avant droite **3** et avant gauche **4.** Sur les dessins, la carrosserie **28** est représentée uniquement par des membrures, longerons ou traverses pour une meilleure visibilité des éléments constitutifs du véhicule mais il est clair qu'une telle carrosserie est destinée à recevoir un habillage tel que des parois de protection réalisées en tout matériau approprié. Par exemple, la carrosserie **28** comporte deux parois latérales **28₁** s'étendant parallèlement entre elles et sensiblement à l'aplomb par rapport aux longerons **2₃** du châssis. Les deux parois latérales **28₁** sont reliées entre elles à l'arrière, par une paroi arrière **28₂** s'étendant verticalement sensiblement à l'aplomb de la face arrière de la structure rigide centrale **2₁.** Les parois latérales **28₁** et la paroi arrière **28₂** permettent de délimiter l'habitacle **30** qui est accessible par une porte **35** permettant de fermer l'avant de l'habitacle **30.** La porte **35** est une porte montée basculante selon un axe horizontal pour occuper une position abaissée pour fermer l'accès au plancher **25 (****Fig. 1****)** et une position relevée (**Fig. 7**) permettant de libérer l'accès au plancher **25** pour autoriser la montée et la descente des utilisateurs du véhicule. La porte **35** permet de fermer et d'ouvrir l'avant du véhicule, entre les roues avant **3, 4.**

Selon une variante de réalisation illustrée sur les dessins, l'habitacle **30** est équipé de deux sièges **36** montés côte à côte et accessibles par l'avant du véhicule. Les deux sièges **36** sont montés sur le châssis **2** pour être orientés vers l'avant du véhicule. Par exemple, les deux sièges **36** comportent des assises **37** montées sur le dessus de la structure rigide centrale **2₁** de manière que les utilisateurs en position assise, puissent avoir leurs pieds qui reposent sur le plancher **25.** Les deux sièges **36** comportent également des dossiers **37** s'étendant à proximité de la paroi arrière **28₂** de la carrosserie.

Selon une variante avantageuse de réalisation, les assises **37** des sièges **36** sont montées sur le châssis pour être relevées au moins en partie vers l'arrière du véhicule pour dégager l'espace vers l'avant du véhicule. Par exemple, les assises **37** des sièges sont montées sur la structure rigide centrale **2₁** par l'intermédiaire d'articulations **39** assurant le pivotement d'avant en arrière des assises **37** (**Fig. 7, 8**). En position relevée des assises **37,** le volume **26** est dégagé.

La porte basculante **35** s'étend comme illustrée sur les figures frontalement entre les deux roues avant **3,4** en venant s'établir au niveau de et avantageusement devant l'extrémité libre des longerons **2₁.** La porte basculante **35** se présente par exemple, sous la forme d'un cadre support **40** présentant deux montants **40₁** reliés ensemble par une traverse arrière **40₂** et par une traverse frontale **40₃** s'étendant parallèlement à la traverse arrière **40₂.** En position abaissée de la porte **35,** la traverse frontale **40₃** est destinée à venir s'établir devant les extrémités des longerons **2₁** et le plancher **25 (****Fig. 1****).** Dans l'exemple illustré, à partir de cette traverse frontale **40₃,** les montants **40₁** s'élèvent sensiblement verticalement sur une hauteur déterminée jusqu'à une traverse intermédiaire de liaison **40₄** s'étendant parallèlement à la traverse frontale **40₃.** La porte basculante **35** présente ainsi entre les traverses frontale **40₃** et intermédiaire **40₄,** une partie **40₅** formant pare-choc destiné à s'établir à l'avant du véhicule **1** en position abaissée de la porte **35.** Bien entendu, cette partie formant le pare-choc **40₅** peut être adaptée pour recevoir divers équipements adaptés aux chocs ou/et système d'éclairage par exemple.

Selon une variante préférée de réalisation, le châssis **2** comporte un système d'absorption des chocs survenant sur la porte **35.** Par exemple, un système d'absorption est monté sur le châssis au niveau des longerons **2₃** pour permettre d'encaisser un choc susceptible d'intervenir sur la porte en position fermée.

Au-delà de la traverse intermédiaire **40₄,** les montants **40₁** sont inclinés vers l'arrière du véhicule de manière que la porte **35** puisse être équipée à cet endroit d'un pare-brise **40₆.** Les montants **40₁** sont prolongés par une partie horizontale jusqu'à la traverse arrière **40₂** pour constituer le plafond **40₇** de l'habitacle **30**.

Selon une variante préférée de réalisation, la porte basculante **35** est déplacée à l'aide d'un mécanisme **50** du type à parallélogramme déformable motorisé. Selon l'exemple illustré, le mécanisme **50** comporte deux bras moteur **51** reliés chacun à l'une de ses extrémités, par un pivot **52** au cadre support **40** de la porte basculante et à l'autre de ses extrémités, à un axe horizontal motorisé **53.** Chaque bras moteur **51** s'étend ainsi dans un plan parallèle à une paroi latérale **28₁** de l'habitacle. L'axe motorisé **53** s'étend ainsi au niveau de la paroi arrière **28₂.** Le pivot **52** entre chaque bras interne **51** et la porte basculante **35,** est aménagé au niveau du montant **40₁** du cadre support **40** et en particulier, au sommet de la partie **40₆** formant le pare-brise.

Le mécanisme **50** comporte également un bras de liaison **55** articulé entre le châssis **2** et le cadre support **40** de la porte basculante **35.** Selon une variante préférée de réalisation, le bras de liaison **55** s'étend sensiblement au milieu de la porte basculante c'est-à-dire, entre les deux sièges **36.** Ce bras de liaison **55** est articulé d'une part, selon un pivot **57** aménagé sur le châssis au niveau de la paroi arrière **28₂** et d'autre part, sur un pivot **58** aménagé sur la traverse frontale de liaison **40₃** du cadre support **40.** Selon cet exemple de réalisation, le mécanisme **50** permet de limiter l'encombrement de la porte basculante **35** en position relevée. Bien entendu, il peut être envisagé de réaliser un mécanisme du type à parallélogramme déformable comportant un nombre supérieur de bras de liaison et de pivots.

Selon une caractéristique avantageuse de réalisation, la porte basculante **35** est équipée d'une traverse de sécurité **60** conçue pour être verrouillée avec le châssis **2** en position abaissée de la porte et s'étendre frontalement devant l'habitacle **30.** Comme cela apparaît plus précisément sur les **Fig. 1** et **7****,** les extrémités de la traverse de sécurité **60** sont destinées en position abaissée de la porte **35,** à s'engager dans des logements de verrouillage **61** aménagés sur les parois verticales **28₁** du châssis. En position abaissée, la traverse de sécurité **60** se trouve verrouillée par ses deux extrémités, au châssis **2** en s'étendant à l'intérieur de l'habitacle en retrait par rapport au cadre support **40.** Avantageusement, les logements de verrouillage **61** sont aménagés chacun sous la forme d'une glissière permettant de recevoir les extrémités de la traverse de sécurité **60** lors du mouvement d'abaissement de la porte **35.** Selon une variante préférée de réalisation, la traverse de sécurité **60** est montée sur bras de liaison **55.** Par exemple, en position abaissée de la porte **35,** le bras de liaison **55** comporte une partie horizontale sur laquelle est fixée la traverse de sécurité **60.** La partie horizontale du bras de liaison **55** se prolonge par des parties de liaison inclinées en sens contraire pour être reliées respectivement aux pivots **57** et **58.**

La traverse de sécurité **60** est adaptée pour supporter des équipements **70** de commande et de pilotage du véhicule. La traverse de sécurité **60** peut avantageusement être habillée pour constituer le tableau de bord du véhicule. Les équipements **70** de pilotage du véhicule permettent de piloter une centrale de commande des moteurs de traction **16.** Ces équipements de commande et de pilotage **70** comportent un système mécanique ou électrique de direction. Dans le cas d'un système mécanique de direction, le système comporte un volant de direction porté par la traverse de sécurité **60.** Ce volant de direction agit sur un train d'engrenages destiné à coopérer en position abaissée de la porte, avec un engrenage d'un arbre de transmission s'étendant entre les sièges jusqu'à un système d'accouplement **71** agissant sur le train de roulement arrière directeur **6.** La rotation du volant de direction permet grâce à cette cinématique mécanique, de piloter l'orientation de ce train de roulement arrière directeur **6.**

Il ressort de la description qui précède que le véhicule **1** selon l'invention présente un faible encombrement comme par exemple, une hauteur égale à 1,7 mètre, une longueur de 1,9 mètre et une largeur de 2 mètres. Du fait de son châssis **2** de forme générale triangulaire et de la cinématique de sa porte **35,** un tel véhicule peut pour le stationnement, s'interpénétrer avec un autre véhicule **1** de même type. Tel que cela ressort plus précisément de la **Fig. 12****,** pour pouvoir interpénétrer les véhicules **1** les uns dans les autres, il suffit de placer la porte basculante **35** en position relevée et de relever le plancher **25** et les assises **37** des sièges de manière que le train central de roulement arrière **6** d'un véhicule vienne s'engager dans le volume libre **26** délimité entre les longerons **2₃** de l'autre véhicule. Une telle disposition permet de gagner par exemple, au minimum 30 % de la longueur des véhicules.

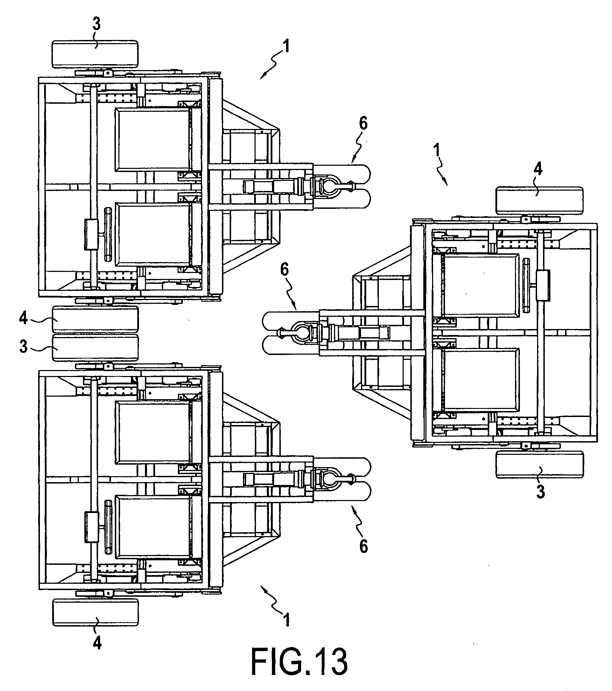

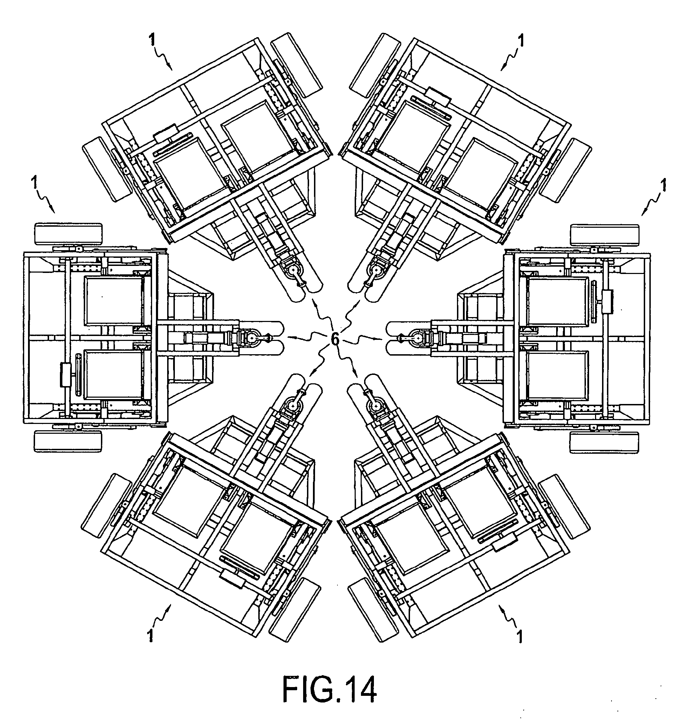

Tel que cela ressort plus précisément de la **Fig. 13****,** il peut être envisagé de garer les véhicules **1** en deux rangées tête-bêche de sorte que le train de roulement arrière directeur **6** d'un véhicule d'une rangée vienne s'interposer dans l'espace délimitée entre les trains de roulement arrière directeur **6** de deux véhicules **1** rangés côte à côte selon une autre rangée. Comme illustré à la **Fig. 14****,** les véhicules **1** peuvent être rangés également selon un cercle avec les trains de roulement arrière directeur **6** dirigés vers le centre du cercle. Par exemple, il peut être prévu de placer au centre du cercle, une borne de rechargement électrique commune pour les véhicules.

Il doit être considéré que la réalisation d'une porte frontale **35** offre un avantage certain pour les utilisateurs pour s'assoir ou se relever des sièges du véhicule comme dans un fauteuil. En effet, les utilisateurs rentrent frontalement dans le véhicule sans être gênés par la porte **35.** Il est à noter qu'il peut être prévu un véhicule **1** dont l'habitacle **30** n'est pas équipé des sièges **36.** Dans ce cas, le plancher **25** est adapté pour recevoir par exemple un ou deux fauteuils roulants, un siège enfant ou un bac de rangement.

Le véhicule **1** selon l'invention possède également une cellule de survie rigide réalisée par le châssis **2** et la traverse de sécurité **60** qui vient se solidariser avec le châssis en position de fermeture de la porte basculante **35.**

## Revendications

1. Véhicule à trois roues, comportant:
- un châssis (**2**) équipé d'un train central de roulement arrière directeur (**6**) et en tant que train de roulement avant, d'une roue motrice avant droite (**3**) et d'une roue motrice avant gauche (**4**) indépendante de la route motrice avant droite, les roues avant (**3, 4**) et le train central arrière (**6**) s'établissant selon un triangle dont la base, délimitée par les roues avant, définit l'avant du véhicule et le sommet, l'arrière du véhicule,
- un premier moteur de traction (**16**) entraînant en rotation la roue motrice avant gauche (**4**) et un deuxième moteur de traction (**16**) entraînant en rotation la roue motrice avant droite (**3**), les moteurs de traction (**16**) étant pilotés par une centrale de commande, **caractérisé en ce qu'**il comporte :
- un plancher (**25**) de réception pour les utilisateurs supporté par le châssis et s'étendant entre les roues avant (**3,4**) en s'ouvrant librement à l'avant du véhicule entre les roues avant gauche et droite,
- une carrosserie (**28**) délimitant au moins au-dessus du plancher (**25**), un habitacle (**30**) s'ouvrant à l'avant entre les roues avant gauche (**4**) et droite (**3**),
- et une porte (**35**) pour fermer l'avant de l'habitacle, montée basculante selon un axe horizontal (**37**) pour occuper une position relevée libérant l'accès au plancher et une position abaissée pour fermer l'accès au plancher, cette porte basculante étant équipée d'un pare-brise (**40₆**) et d'équipements (**70**) de commande et de pilotage du véhicule.

2. Véhicule selon la revendication 1, **caractérisé en ce que** la porte basculante (**35**) est équipée d'une traverse de sécurité (**60**) conçue pour être verrouillée avec le châssis (**2**) en position abaissée de la porte et s'étendre frontalement devant l'habitacle.

3. Véhicule selon la revendication 1 ou 2, **caractérisé en ce que** la porte basculante (**35**) est pourvue d'un pare-chocs destiné à venir s'établir à l'avant du véhicule en position abaissée de la porte.

4. Véhicule selon l'une des revendications 1 à 3, **caractérisé en ce que** la porte basculante (**35**) est déplacée à l'aide d'un mécanisme (**50**) du type à parallélogramme déformable motorisé.

5. Véhicule selon la revendication 4, **caractérisé en ce que** le mécanisme (**50**) du type à parallélogramme déformable motorisé comporte deux bras-moteurs (**51**) reliés chacun à l'une de ses extrémités à un axe motorisé (**53**) porté par le châssis et à l'autre de ses extrémités à un cadre support (**40**) de la porte basculante par l'intermédiaire d'un pivot (**52**), le mécanisme (**50**) comportant également au moins un bras de liaison (**55**) articulé entre le châssis (**2**) et le cadre support (**40**) de la porte.

6. Véhicule selon la revendication 5, **caractérisé en ce que** le bras de liaison (**55**) s'étend sensiblement au milieu du cadre support (**40**) de la porte basculante (**35**) en étant relié à la traverse de sécurité et à une traverse frontale de liaison (**40₃**) du cadre support (**40**) de la porte.

7. Véhicule selon l'une des revendications 1 à 6, **caractérisé en ce que** le châssis (**2**) comporte un système d'absorption des chocs survenant sur la porte.

8. Véhicule selon l'une des revendications 1 à 7, **caractérisé en ce que** l'habitacle (**30**) est équipé de deux sièges (**36**) montés côte à côte et accessibles par l'avant du véhicule.

9. Véhicule selon la revendication 8, **caractérisé en ce que** les deux sièges (**36**) et le plancher (**25**) sont montés sur une structure relevable (**27, 39**) permettant de dégager dans l'habitacle, un espace (**26**) qui en position relevée de la porte est accessible pour l'engagement de l'arrière d'un véhicule électrique de même type.

10. Véhicule selon l'une des revendications 1 à 9, **caractérisé en ce que** le châssis (**2**) comporte une structure rigide centrale **(2₁)** à partir de laquelle s'étend à l'avant, deux longerons **(2₃)** entre lesquels le plancher est positionné, la structure rigide centrale **(2₁)** comportant vers l'arrière une structure de support **(2₂)** convergente vers le train central de roulement arrière directeur (**6**).

11. Véhicule selon la revendication 10, **caractérisé en ce que** la structure rigide centrale (**2₁**) supporte élastiquement, pour chaque roue motrice avant (**3, 4**) un demi-essieu (**15**) relié à un moteur de traction (**16**) et par une transmission (**17**), à l'axe (**1**8) de la roue avant (**3, 4**) supporté par un bras de suspension (**13**).

12. Véhicule selon la revendication 1, **caractérisé en ce que** le train central de roulement arrière directeur (**6**) est un bogie à axe vertical (**6₂**) piloté en rotation.

13. Véhicule selon la revendication 1, **caractérisé en ce que** les équipements de pilotage du véhicule (**70**) comportent un système mécanique ou électrique de direction.

14. Véhicule selon la revendication 13, **caractérisé en ce que** le système mécanique de direction comporte un volant de direction porté par la traverse de sécurité (**60**) de la porte basculante (**35**), le volant de direction agissant sur un train d'engrenages destinés à coopérer en position abaissée de la porte, avec un engrenage d'un arbre de transmission agissant sur le train de roulement arrière directeur (**6**).

## Patentansprüche

1. Dreirädriges Fahrzeug, umfassend:
- einen Rahmen (2), der mit einem mittleren hinteren Lenkfahrwerk (6) und, als vorderes Fahrwerk, mit einem rechten vorderen Antriebsrad (3) und mit einem linken vorderen Antriebsrad (4), das von dem rechten vorderen Antriebsrad unabhängig ist, ausgestattet ist, wobei die Vorderräder (3, 4) und das mittlere hintere Fahrwerk (6) in einem Dreieck angeordnet sind, dessen durch die Vorderräder begrenzte Basis den Vorderteil des Fahrzeugs und die Spitze das Heck des Fahrzeugs definiert,
- einen ersten Traktionsmotor (16), der das linke vordere Antriebsrad (4) drehantreibt und einen zweiten Traktionsmotor (16), der das rechte vordere Antriebsrad (3) drehantreibt, wobei die Traktionsmotoren (16) durch eine Steuerzentrale gesteuert werden,
**dadurch gekennzeichnet, dass** es umfasst:
- einen Aufnahmeboden (25) für die Benutzer, der durch den Rahmen getragen ist und der sich im vorderen Teil des Fahrzeugs zwischen dem linken und dem rechten Vorderrad frei öffnend zwischen den Vorderrädern (3, 4) verläuft,
- eine Karosserie (28), die wenigstens oberhalb des Bodens (25) eine sich vorne zwischen dem linken (4) und dem rechten (3) Vorderrad öffnende Fahrgastzelle (30) begrenzt, und
- eine Tür (35), um den Vorderteil der Fahrgastzelle zu schließen, die um eine horizontale Achse (37) schwenkbar angebracht ist, um eine hochgeklappte Position, die den Zugang zu dem Boden freigibt, und eine abgesenkte Position, um den Zugang zu dem Boden zu verschließen, einzunehmen, wobei diese Schwenktür mit einer Windschutzscheibe (40₆) und mit Einrichtungen (70) zum Bedienen und Steuern des Fahrzeugs ausgestattet ist.

2. Fahrzeug nach Anspruch 1, **dadurch gekennzeichnet, dass** die Schwenktür (35) mit einer Sicherheitstraverse (60) ausgestattet ist, die dazu ausgelegt ist, mit dem Rahmen (2) in abgesenkter Position der Tür verriegelt zu werden und sich frontal vor der Fahrgastzelle zu erstrecken.

3. Fahrzeug nach Anspruch 1 oder 2, **dadurch gekennzeichnet, dass** die Schwenktür (35) mit einem Stoßfänger versehen ist, welcher dazu bestimmt ist, in abgesenkter Position der Tür am vorderen Teil des Fahrzeugs zu liegen zu kommen.

4. Fahrzeug nach einem der Ansprüche 1 bis 3, **dadurch gekennzeichnet, dass** die Schwenktür (35) mit Hilfe eines Mechanismus (50) vom Typ mit motorisiertem deformierbarem Parallelogramm bewegt wird.

5. Fahrzeug nach Anspruch 4, **dadurch gekennzeichnet, dass** der Mechanismus (50) vom Typ mit motorisiertem deformierbarem Parallelogramm zwei Antriebsarme (51) umfasst, die jeweils an einem ihrer Enden mit einer durch den Rahmen getragenen motorisierten Achse (53) und an dem anderen ihrer Enden mit einem Tragrahmen (40) der Schwenktür mittels einer Schwenkachse (52) verbunden sind, wobei der Mechanismus (50) auch wenigstens einen Verbindungsarm (55), der zwischen dem Rahmen (2) und dem Tragrahmen (40) der Tür angelenkt ist, umfasst.

6. Fahrzeug nach Anspruch 5, **dadurch gekennzeichnet, dass** der Verbindungsarm (55) sich im Wesentlichen in der Mitte des Tragrahmens (40) der Schwenktür (35) erstreckt und dabei mit der Sicherheitstraverse und mit einer stirnseitigen Verbindungstraverse (40₃) des Tragrahmens (40) der Tür verbunden ist.

7. Fahrzeug nach einem der Ansprüche 1 bis 6, **dadurch gekennzeichnet, dass** der Rahmen (2) ein System zur Aufnahme der an der Tür auftretenden Stöße umfasst.

8. Fahrzeug nach einem der Ansprüche 1 bis 7, **dadurch gekennzeichnet, dass** die Fahrgastzelle (30) mit zwei Sitzen (36), die nebeneinander angebracht und über die Vorderseite des Fahrzeugs zugänglich sind, ausgestattet ist.

9. Fahrzeug nach Anspruch 8, **dadurch gekennzeichnet, dass** die beiden Sitze (36) und der Boden (25) auf einer hochklappbaren Struktur (27, 39) angebracht sind, die ermöglicht, in der Fahrgastzelle einen Raum (26) freizulegen, der in der hochgeklappten Position der Tür für das Eingreifen, von hinten, eines elektrischen Fahrzeugs gleichen Typs zugänglich ist.

10. Fahrzeug nach einem der Ansprüche 1 bis 9, **dadurch gekennzeichnet, dass** der Rahmen (2) eine mittlere starre Struktur (2₁) umfasst, von der ausgehend sich vorne zwei Längsträger (2₃) erstrecken, zwischen denen der Boden positioniert ist, wobei die mittlere starre Struktur (2₁) nach hinten eine in Richtung des mittleren hinteren Lenkfahrwerks (6) konvergente Tragstruktur (2₂) umfasst.

11. Fahrzeug nach Anspruch 10, **dadurch gekennzeichnet, dass** die starre mittlere Struktur (2₁) für jedes vordere Antriebsrad (3, 4) eine Halbachse (15), die mit einem Traktionsmotor (16) und über eine Übersetzung (17) mit der durch einen Lenkerarm (13) getragenen Achse (18) des Vorderrades (3, 4) verbunden ist, elastisch trägt.

12. Fahrzeug nach Anspruch 1, **dadurch gekennzeichnet, dass** das mittlere hintere Lenkfahrwerk (6) ein Fahrgestell mit drehgesteuerten vertikaler Achse (6₂) ist.

13. Fahrzeug nach Anspruch 1, **dadurch gekennzeichnet, dass** die Einrichtungen zur Steuerung des Fahrzeugs (70) ein mechanisches oder elektrisches Lenksystem umfassen.

14. Fahrzeug nach Anspruch 13, **dadurch gekennzeichnet, dass** das mechanische Lenksystem ein Lenkrad, das durch die Sicherheitstraverse (60) der Schwenktür (35) getragen ist, umfasst, wobei das Lenkrad auf einen Getriebezug wirkt, der dazu bestimmt ist, in abgesenkter Position der Tür mit einem Getriebe einer Übertragungswelle, welche auf das hintere Lenkfahrwerk (6) wirkt, zusammenzuwirken.

## Claims

1. A three-wheeled vehicle, comprising :
· a chassis (2) having a rear central steered wheel set (6) and as its front wheel set, a front right drive wheel (3) and a front left drive wheel (4) that is independent of the front right drive wheel, the front wheels (3, 4) and the central rear wheel set (6) being arranged in a triangle with a base defined by the front wheels defining the front of the vehicle, and with an apex defining the rear of the vehicle;
· a first traction motor (16) driving the front left drive wheel (4) in rotation and a second traction motor (16) driving the front right drive wheel (3) in rotation, the traction motors (16) being controlled by a control unit;
**characterized in that** it comprises :
· a reception floor (25) for receiving users, the floor being supported by the chassis and extending between the front wheels (3, 4), while opening freely towards the front of the vehicle between the left and right front wheels;
· bodywork (28) defining, at least over the floor (25), a cabin (30) that opens to the front between the left and right front wheels (3, 4); and
· a door (35) for closing the front of the cabin, the door being mounted to tilt about a horizontal axis (37) so as to occupy a raised position releasing access to the floor, and a lowered position for closing off access to the floor, the tilting door being fitted with a windshield (40₆) and with equipment (70) for controlling and driving the vehicle.

2. A vehicle according to claim 1, **characterized in that** the tilting door (35) is fitted with a safety cross-member (60) designed to be locked to the chassis (2) in the lowered position of the door and to extend frontally in front of the cabin.

3. A vehicle according to claim 1 or claim 2, **characterized in that** the tilting door (35) is provided with a bumper for taking up Position at the front of the vehicle when the door is in the lowered position.

4. A vehicle according to any one of claims 1 to 3, **characterized in that** the tilting door (35) is moved with the help of a mechanism (50) of the motor-driven deformable parallelogram type.

5. A vehicle according to claim 4, **characterized in that** the mechanism (50) of the motor-driven deformable parallelogram type comprises two drive arms (51), each connected at one of its ends to a motor-driven shaft (53) carried by the chassis and connected at its other end by a pivot (52) to a supporting framework (40) of the tilting door, the mechanism (50) also including at least one connection arm (55) hinged between the chassis (2) and the supporting framework (40) of the door.

6. A vehicle according to claim 5, **characterized in that** the connection arm (55) extends substantially in the middle of the supporting framework (40) of the tilting door (35), being connected to the safety cross-member and to a front connection cross-member (40₃) of the supporting framework (40) of the door.

7. A vehicle according to any one of claims 1 to 6, **characterized in that** the chassis (2) includes a system for absorbing impacts occurring against the door.

8. A vehicle according to any one of claims 1 to 7, **characterized in that** the cabin (30) is fitted with two seats (36) mounted side by side and accessible from the front of the vehicle.

9. A vehicle according to claim 8, **characterized in that** the two seats (36) and the floor (25) are mounted on a raisable structure (27, 39) enabling a space (26) to be disengaged in the cabin, which space is accessible when the door is in the raised position so as to enable the rear of an electric vehicle of the same type to be engaged therein.

10. A vehicle according to any one of claims 1 to 9, **characterized in that** the chassis (2) comprises a central rigid structure (2₁) from which two side rails (2₃) extend forwards, the floor being positioned between the side rails, the central rigid structure (2₁) including towards the rear a support structure (2₂) converging towards the rear central steered wheel set (6).

11. A vehicle according to claim 10, **characterized in that**, for each front drive wheel (3, 4), the central rigid structure (2₁) supports resiliently a half-axle (15) connected both to a traction motor (16) and also, via a transmission (17), to the shaft (18) of the front wheel (3, 4) supported by a suspension arm (13).

12. A vehicle according to claim 1, **characterized in that** the rear central steered wheel set (6) is a bogie (6₂) that is controllable in pivoting about a vertical axis.

13. A vehicle according to claim 1, **characterized in that** the driving equipment of the vehicle (70) includes a mechanical or electrical steering system.

14. A vehicle according to claim 13, **characterized in that** the mechanical steering system comprises a steering wheel carried by the safety cross-member (60) of the tilting door (35), the steering wheel acting on a geartrain for co-operating, when the door is in the lowered position, with a gear of a transmission shaft acting son the rear central steered wheel set (6).
